# EUROPÄISCHE PATENTSCHRIFT

(11) **EP 2 834 317 B1**
(45) Veröffentlichungstag und Bekanntmachung des Hinweises auf die Patenterteilung: **27.05.2020**
(21) Anmeldenummer: 12724556.1
(22) Anmeldetag: 04.04.2012
(51) Int. Cl.: C09K 5/08, C09K 5/14, C04B 41/49, C04B 41/84, H05B 3/74

(54) **WÄRMETRÄGER**
HEAT TRANSFER MEDIUM
ÉLÉMENT CALOPORTEUR

(43) Veröffentlichungstag der Anmeldung: 11.02.2015
(73) Patentinhaber: Lucht LHZ Elektroheizung GmbH&Co. Kg, 09232 Hartmannsdorf (DE)
(72) Erfinder: LUCHT, Uwe, 06780 Zörbig (DE)
(74) Vertreter: Stache, Hans-Georg
(86) Internationale Anmeldenummer: PCT/DE2012/000379
(87) Internationale Veröffentlichungsnummer: WO 2013/149602

(56) Entgegenhaltungen:
- EP-A1- 1 923 375
- EP-A2- 1 313 352
- EP-B1- 1 089 594
- JP-A- 7 161 453
- US-A1- 2012 025 132
- O'CONNOR, ROSAMUND ANNE ROBERTS; ZYTKOW, SONJA JANINA: "Coating a surface of ceramic article", 6001 CHEMICAL ABSTRACTS, Bd. 105, Nr. 20, 17. November 1986 (1986-11-17), XP000185108, Columbus, OH, US ISSN: 0009-2258

## Beschreibung

Die Erfindung betrifft einen Wärmeträger bestehend aus Schamotte, einem schamottehaltigem Gemisch oder einem keramischen Werkstoff.

Derartige Wärmeträger sind in der Regel plattenförmig ausgebildet. Wärmeträger mit einer in die Schamotte, das schamottehaltige Gemisch oder in den keramischen Werkstoff eingebetteten Heizleiter finden insbesondere in Elektrospeicherheizungen Anwendung.

Bekannte beheizbare Wärmeträger sind dadurch gekennzeichnet, dass durch die Auswahl der Schamotte oder eines Schamotte enthaltenden Gemisches in Bezug auf die Wärmeaufnahme, die Wärmespeicherung und die Wärmeabgabe möglichst gute Eigenschaften erzielt werden sollen. So geht aus US 4 634 841 ein plattenförmiger Heizkörper hervor, der aus einem Gemisch aus Klei, Talk und Lignitte besteht.

Die EP 1 089 594 B1 offenbart eine Heizplatte als Wärmeträger, bei der ein Heizblock aus einem Schamotte und Speckstein umfassenden Gemisch mit einer darin eingebetteten Heizleiter gebrannt ist.

Andere Entwicklungen zielen darauf ab, durch Veränderungen der Geometrie des Wärmeträgers zusätzliche Effekte zu erschließen.

Die EP 1 313 352 A2 offenbart dazu ein beheizbares plattenförmiges Flächenelement, das zur Vergrößerung seiner Oberfläche auf mindestens einer Seite eine waffelartig ausgebildete dreidimensionale Struktur aufweist. Wie ebenfalls aus der EP 1 313 352 A2 hervorgeht, werden Heizplatten dieser Art zum Teil mit einer keramischen Glasurschicht überzogen. Ein aus Rohton, schamottiertem Rohton, Edelglas-/Porzelanmehl und Talkum bestehende und gebrannte Heizplatte soll eine größere Kompaktheit und geringere Porosität aufweisen.

Mit dem zunehmenden Einsatz von Elektroheizungen, die mit Wärmeträgern der genannten Art bestückt sind, in Räumen mit hoher Luftfeuchtigkeit, insbesondere in Feuchträumen, kommt der Qualität der Heizplatten in Bezug auf ihre Eignung für derartige Räume eine besondere Bedeutung zu.

Unbehandelte aus Schamotte oder einem Schamotte enthaltenden Gemisch bestehende Wärmeträger sind auf grund der porösen Struktur des Materials und der darauf basierenden Fähigkeit, Feuchtigkeit aufzunehmen, für diesen Zweck nicht geeignet.

Wärmeträger, deren Oberfläche mit einer Glasurschicht überzogen ist, genügen auf Dauer ebenfalls nicht den gestellten Anforderungen. Unterschiedliche Ausdehnungskoeffizienten der sich berührenden Materialien führen insbesondere bei einem schnellen Aufheizen zunächst zu Haarrissen, die sich mit der Zeit vergrößern. Abgesehen von den lästigen Knackgeräuschen beim Aufheizen entstehen auf diese Weise zunehmend größere Feuchtigkeit aufnehmende Flächen.

Aus der Druckschrift JP 7 161 453 A ist ein keramischer Heizapparat bekannt, welcher eine wasserabweisende Schicht aufweist. Die Druckschrift US 2112/025 132 A1 offenbart eine wärmeleitende Stoffzusammensetzung zum Einsatz in Heizapparaten. Die wasserabweisende Schicht bzw. die wärmeleitende Stoffzusammensetzung weisen Bestandteilen aus Silikon-Carbid, Metall-Silikon-Pulver und anorganischen Füllstoffen aufweist. Nachteilig daran sind hohe Produktionskosten und eine geringe mechanische Belastbarkeit.

Aufgabe der Erfindung ist es daher, einen Wärmeträger bereitzustellen, der Feuchtigkeit abweist, für Konvektoren einsetzbar ist und insbesondere für Elektrospeicherheizungen in Feuchträumen oder Räumen mit einer hohen Luftfeuchtigkeit geeignet ist und der darüber hinaus ein breites Anwendungsgebiet aufweist und rationell herstellbar ist.

Erfindungsgemäß wird die Aufgabe durch einen Wärmeträger gemäß Anspruch 1 gelöst.

Mit dem erfindungsgemäßen Wärmeträger verbindet sich nicht nur der Vorzug, dass er gegen Feuchtigkeit resistent ist, sondern dass er Feuchtigkeit abweist. Erweist darüber hinaus gegenüber Heizplatten bekannter Art ein verbessertes mechanisches Verhalten auf, ist abriebfest und zudem leicht zu reinigen. Da der Einsatz von Pulvern zur Lackbeschichtung ohne Lösungsmittel erfolgt, ist die Verwendung des erfindungsgemäßen Wärmeträgers in Konvektoren und anderen Elektroheizungen nicht mit gesundheitlichen Gefährdungen verbunden.

Für die erfinderische Leistung spricht, dass mit der vorgeschlagenen technischen Lösung das herkömmliche Gebiet des Einsatzes von Pulver für die Lackbeschichtung von Metall- und Kunststoffteilen verlassen und ein neues Einsatzgebiet, nämlich die Beschichtung von Erzeugnissen und Bauteilen bestehend aus Schamotte, schamottehaltigen Gemischen oder keramischen Werkstoffen eröffnet wird.

Gemäß einer besonders bevorzugten Ausführungsform der Erfindung ist in die Schamotte, das schamottehaltige Gemisch oder in den keramischen Werkstoff ein Heizleiter eingebettet ist.

Erfindungsgemäß ist vorgesehen, dass der Pulverlack aus einem hochtemperaturbeständigem Pulver auf Epoxy-Silikon-Basis und/oder Silikon-Polyesterharz-Basis besteht. Vorzugsweise ist der Pulverlack aus dem hochtemperaturbeständigem Pulver auf Epoxy-Silikon-Basis und/oder Silikon-Polyesterharz-Basis geschmolzen.

Erfindungsgemäß ist das für den Pulverlack verwendete Pulver bis zu einer Temperatur von 600°C hitzebeständig ist.

Gemäß einer weiteren Ausführungsform der Erfindung ist das Pulver bei einer Temperatur von 180°C bis 230°C, vorzugsweise von 195°C, und bei einer Verweildauer bei dieser Temperatur von 15 Minuten bis 30 Minuten, vorzugsweise von 25 Minuten, aufgeschmolzen.

Erfindungsgemäß besitzt der auf dem Wärmeträger aufgebrachte Pulverlack eine Schichtdicke von 20 µm bis 70 µm, vorzugsweise von 50 µm.

Erfindungsgemäß wird die Aufgabe auch dadurch gelöst, dass ein Wärmeträger gemäß den genannten Merkmalen als Heiz- und/oder Wärmespeicherelement in Elektrospeicherheizungen und/oder Konvektoren verwendet wird.

Des weiteren wird die Aufgabe auch dadurch gelöst, dass ein Wärmeträger mit den genannten Merkmalen als Heiz- und Wärmespeicherelement in Warmhalteplatten für Speisen, in Modulen mit Warmhalteplatten, in Wärmeplatten oder zur Temperierung bei der Kükenaufzucht, in Brutmaschinen und/oder Terrarien Verwendung findet.

Im Folgenden soll die Erfindung an Hand eines Ausführungsbeispieles näher beschreiben werden.

Eine schamottehaltige Platte mit einem darin eingebetteten Heizleiter in den Abmessungen 540 mm x 150 mm x 20 mm soll mit einem Pulverlack beschichtet werden. Zum Einsatz kommt das unter der Marke MOR-TEMP® angebotene Epoxy-Silikon-Pulver vom Typ FLAT BLACK HHA 99-7014.

Mittels einer elektrostatischen Sprühpistole wird das Pulver im teilautomatisierten kontinuierlichen Fertigungsprozess auf die schamottehaltige Platte aufgetragen. Bei einer Temperatur von 195°C und einer Verweildauer von 25 Minuten bei dieser Temperatur wird das Pulver zu einem Lack aufgeschmolzen. Bei einer Ergiebigkeit des verwendeten Pulvers bezogen auf die pro kg beschichtende Fläche von 13 m²/kg wurde eine Schichtdicke des Lackes auf dem Wärmeträger von 50 µm erzielt.

Es versteht sich, dass die Schichtdicke als ein wichtiger Parameter nicht nur Einfluss auf die Wirtschaftlichkeit hat. Im vorliegenden Fall wurde ein beheizbarer Wärmeträger mit einer matten Oberfläche und mit den gewünschten physikalischen Eigenschaften erzielt. Die Lackschicht gab dem Wärmeträger eine Feuchtigkeit abweisende Wirkung und Chemikalienbeständigkeit. Der Wärmeträger ist wie erforderlich mechanisch belastbar, er weist keinen Abrieb auf und er besitzt auch die für eine Montage erforderliche Passgenauigkeit und ist zudem kostengünstig herstellbar.

Je nach dem vorgesehenen Verwendungszweck des Wärmeträgers ist der Auftrag des Pulvers zu variieren, um Schichtdicken zwischen 20 µm bis 70 µm zu erhalten. Je nach der gewünschten Schichtdicke wird das Pulver bei einer Temperatur von 180°C bis 230°C, und bei einer Verweildauer bei dieser Temperatur von 15 Minuten bis 30 Minuten aufgeschmolzen.

Auf Grund seiner Eigenschaften, insbesondere seiner physikalischen Eigenschaften, besitzt der erfindungsgemäße Wärmeträger neben seinem Haupteinsatzgebiet als Heiz- bzw. Wärmespeicherelement ein sehr breites Anwendungsgebiet, das durch die Möglichkeit einer variablen Farbgestaltung des Pulverlackes wirksam unterstützt werden kann. So ist er verwendbar als Heiz- und/oder Wärmespeicherelement in Warmhalteplatten für Speisen, in Modulen mit Warmhalteplatten, in Wärmeplatten oder zur Temperierung bei der Kükenaufzucht, in Brutmaschinen und/oder Terrarien.

## Patentansprüche

1. Wärmeträger, bestehend aus Schamotte, einem schamottehaltigen Gemisch oder einem keramischen Werkstoff und mit einem Feuchtigkeit abweisenden Pulverlack beschichtet, **dadurch gekennzeichnet, dass** der Pulverlack mit einer Schichtdicke von 20 µm bis 70 µm allseitig auf den Wärmeträger aufgebracht ist, aus einem hochtemperaturbeständigem Pulver auf Epoxy-Silikon-Basis und/oder Silikon-Polyesterharz-Basis besteht und bis zu einer Temperatur von 600°C hitzebeständig ist.

2. Wärmeträger nach Anspruch 1, **dadurch gekennzeichnet, dass** das Pulver bei einer Temperatur von 180°C bis 210°C, vorzugsweise von 195°C und bei einer Verweildauer bei dieser Temperatur von 15 Minuten bis 30 Minuten aufgeschmolzen ist.

3. Wärmeträger nach Anspruch 1 oder 2, **dadurch gekennzeichnet, dass** in die Schamotte, das schamottehaltige Gemisch oder den keramischen Werkstoff ein Heizleiter eingebettet ist.

4. Verwendung eines Wärmeträgers gemäß den Ansprüchen 1 bis 3 als Heiz- und Wärmespeicherelement in Elektrospeicherheizungen und/oder Konvektoren.

5. Verwendung eines Wärmeträgers gemäß den Ansprüchen 1 bis 3, als Heiz- und Wärmespeicherelement in Warmhalteplatten für Speisen, in Modulen mit Warmhalteplatten, in Wärmeplatten oder zur Temperierung bei der Kükenaufzucht, in Brutmaschinen und/oder Terrarien.

## Claims

1. Heat transfer medium, comprising fireclay, a fireclay-containing mixture or a ceramic material and coated with a moisture-repellent powder coating, **characterised in that** the powder coating is applied to all sides of the heat transfer medium with a layer thickness of 20 µm to 70 µm, consists of a high-temperature-resistant powder on an epoxy-silicone basis and/or silicone-polyester resin basis and is heat-resistant up to a temperature of 600 °C.

2. Heat transfer medium according to claim 1, **characterised in that** the powder is molten at a temperature of 180 °C to 210 °C, preferably 195 °C, and when exposed to said temperature for a retention time of 15 minutes to 30 minutes.

3. Heat transfer medium according to claim 1 or 2, **characterised in that** a heat conductor is embedded in the fireclay, the fireclay-containing mixture or the ceramic material.

4. Use of a heat transfer medium according to claims 1 to 3 as a heat and warmth storage element in electrical storage heaters and/or convectors.

5. Use of a heat transfer medium according to claims 1 to 3, as a heat and warmth storage element in plate warmers for food dishes, in modules with plate warmers, in hotplates or for temperature control during chicken rearing, in incubators and/or terrariums.

## Revendications

1. Élément caloporteur constitué de chamotte, d'un mélange contenant de la chamotte ou d'un matériau céramique et revêtu d'une peinture en poudre hydrofuge, **caractérisé en ce que** la peinture en poudre est appliquée sur toutes les faces de l'élément caloporteur avec une épaisseur de couche de 20 µm à 70 µm, est constituée d'une poudre résistante aux hautes températures à base d'époxy-silicone et/ou à base de résine de silicone-polyester et est résistante à la chaleur jusqu'à une température de 600 °C.

2. Élément caloporteur selon la revendication 1, **caractérisé en ce que** la poudre est fondue à une température de 180 °C à 210 °C, de préférence de 195 °C, et avec un temps de séjour à cette température de 15 minutes à 30 minutes.

3. Élément caloporteur selon la revendication 1 ou 2, **caractérisé en ce qu'**un conducteur chauffant est noyé dans la chamotte, le mélange contenant de la chamotte ou le matériau céramique.

4. Utilisation d'un élément caloporteur selon les revendications 1 à 3 comme élément chauffant et accumulateur de chaleur dans des radiateurs électriques à accumulation et/ou des convecteurs.

5. Utilisation d'un élément caloporteur selon les revendications 1 à 3 comme élément chauffant et accumulateur de chaleur dans des chauffe-plats pour aliments, dans des modules avec chauffe-plats, dans des plaques chauffantes ou pour la régulation de température dans l'élevage de poussins, dans des couveuses et/ou des terrariums.
